# EUROPÄISCHE PATENTSCHRIFT

(11) **EP 0 370 327 B1**
(45) Veröffentlichungstag und Bekanntmachung des Hinweises auf die Patenterteilung: **24.08.1994**
(21) Anmeldenummer: 89120832.4
(22) Anmeldetag: 10.11.1989
(51) Int. Cl.: G05B 13/04

(54) **Optimierer für ein parameterabhängiges Netzwerksystem**
Optimizer for a parameter-dependent network system
Optimaliseur pour système de réseaux dépendant de paramètres

(30) Priorität: 24.11.1988 DE 3839675
(43) Veröffentlichungstag der Anmeldung: 30.05.1990
(73) Patentinhaber: Lawrenz, Wolfhard, Prof. Dr.-Ing., D-38302 Wolfenbüttel (DE)
(72) Erfinder: Lawrenz, Wolfhard, Prof. Dr.-Ing., D-38302 Wolfenbüttel (DE)
(74) Vertreter: Lins, Edgar, Dipl.-Phys. Dr.jur.

(56) Entgegenhaltungen:
- EP-A- 0 077 685
- DE-A- 3 422 561
- PATENT ABSTRACTS OF JAPAN vol. 10, no. 274 (P-498)(2330) 18 September 1986,& JP-A-61 95404 (NEC CORP.) 14 Mai 1986,
- Elektronik, Nr. 18, 4.9.1987, Prof. Dr.-Ing. Wolhard Lawrenz "Entwicklungswerkzeuge für Controller- Netzwerke", Seiten 136-140
- North-Holland Microprocessing and Microprogramming, Nr. 21, 1987, Prof. Dr. Wolfhard Lawrenz "CONTROLLER NETWORK DEVELOPMENT - BUT HOW?", Seiten 111-117

## Beschreibung

Die Erfindung betrifft eine Optimiereranordnung für ein parameterabhängiges Netzwerksystem, bestehend aus einer Mehrzahl von Reglern, die zur Kommunikation festgestellter Parameter durch ein Netzwerk miteinander verbunden sind und Steuerungswerte für ein gesteuertes System erstellen.

Steuerungssysteme können Steuerungen aufweisen, deren Eingangswerte aus dem gesteuerten System stammen, so daß ein geschlossener Regelkreis gebildet wird. Es ist aber auch möglich, daß die Eingangswerte nicht unmittelbar aus dem gesteuerten System kommen, so daß ein offenes Steuerungssystem vorliegt.

Im einfachsten Fall können die Parameter der Steuerung Verstärkungsfaktoren o. ä. der Steuerung beeinflussen. Es ist bekannt, abhängig von der Steuerleisteung, also vom Ergebnis der durchgeführten Steuerung, die Parameter zu verändern, so daß beispielsweise ein nachgeführter Regler realisiert wird. Ein derartiges Nachführen des Reglers setzt einen determinierten Zusammenhang zwischen dem Parameter und der Steuerungsleistung voraus. Die Nachführung von Reglern stößt dann an ihre Grenzen, wenn ein komplexeres System vorliegt, bei dem die Steuerungen voneinander abhängig sind und/oder sich gegenseitig beeinflussen. In diesem Fall bestehen regelmäßig keine berechenbare Zusammenhänge zwischen der Steuerungsleistung und den Parametern. Ein Nachführen der Parameter ist in diesem Fall nicht möglich. Es kann allenfalls versucht werden, in Probeläufen des Steuerungssystems ge-eignete Parameterkombinationen durch Ausprobieren zu finden. Dieser Fall liegt regelmäßig in einem Netzwerk vor.

Betrachtet man beispielsweise als Steuerungssystem ein Automobil, so ist erkennbar, daß das Ausprobieren daß das Ausprobieren in Probeläufen hinreichend aufwendig ist, wenn die Regelungen von Motor, Getriebe, Bremsen mit einem Kommunikationsnetzwerk ausgeführt werden. Zwar läßt sich ein solches Netzwerk simulieren, so daß das Erproben von verschiedenen Parameterkombinationen, also beispielsweise Größe des im Netzwerk verwendeten Datenbusses sowie Prioritätsvergaben für übermittelte Nachrichten, am simulierten System erproben lassen, eine sichere Aussage für eine optimale Parameterkombination für das reale System läßt sich damit jedoch nicht erhalten.

In bisheriger Technik ist versucht worden, das vernetzte System gleich optimal aufzubauen. Hierfür sind "Tools" bekannt (vgl. Lawrenz "Entwicklungswerkzeuge für Controller-Netzwerke", Elektronik Heft 18/1987, Seite 136 bis 140 und Lawrenz "Controller Network Development - But how?!" in Microprocessing and Microprogramming 21 (1987), Seiten 111 bis 118), die Hilfestellungen beim Aufbau und zur Optimierung eines derartigen vernetzten Systems leisten. Diese Tools erlauben in einer ersten Stufe eine Simulation des Kommunikations- und Steuerungsablaufes im Netzwerk nach Randvorgaben des Systemdesigners. Diese Simulation ist viel langsamer als der reale Vorgang, was für den geschilderten Anwendungszweck aber irrelevant ist. In einer zweiten Stufe wird mit einem Emulator eine Teilsimulation bei einem teilweise real aufgebauten vernetzten System vorgenommen. Eine derartiger Emulator kann echtzeitfähig aufgebaut sein. In der abschließenden Stufe überprüft ein Analysator, wie die Abläufe in dem aufgebauten, realen vernetzten System sind. Ist das Netzwerk aufgebaut, läßt sich nur schwierig ermitteln, ob die den einzelnen Reglern zugeordneten Parameter optimal sind. Hierzu müssen Versuche durchgeführt werden, die kaum systematisch, sondern nur stichprobenartig wegen der hohen Anzahl der möglichen Parameterkombinationen durchführbar sind.

Der Erfindung liegt die Aufgabe zugrunde, einen Optimiereranordnung für ein parameterabhängiges Steuerungssystem der eingangs erwähnten Art zu erstellen, der eine Optimierung der Parameter des realen Systems erlaubt.

Diese Aufgabe wird bei einer Optimiereranordnung der eingangs erwähnten Art gelöst durch
- einem mit dem Netzwerk verbundenen Netzwerkanalysator zur Feststellung des Kommunikationsablauf im Netzwerk,
- einem mit dem Netzwerkanalysator verbundenen Netzwerksimulator,
- einem mit dem Netzwerksimulator verbundenen Optimierer, der Parameter der Regler für das im Netzwerksimulator simulierte Netzwerk variiert, bis eine optimierte Arbeitsweise in dem simulierten Netzwerk erzielt wird, und der die zur optimierten Arbeitsweise gehörenden Parameter feststellt und
- einem Parametersteller zur Anderung der Arbeitsweise wenigstens eines Reglers bezüglich des Kommunikationsablaufs im Netzwerk in Übereinstimmung mit dem zur optimierten Arbeitsweise gehörenden, im Optimierer festgestellten Parameter.

Während bisher die Optimierung von Netzwerken unter Verwendung der mit Hilfe eines Netzwerksimulators, -emulators oder -analysators gewonnenen Erkenntnisse durch den Netzwerkdesigner aufgrund seiner Erfahrung versucht worden ist, wird erfindungsgemäß eine Optimierung des Netzwerkes mit Hilfe einer Optimierungsdaten ermittelnden Optimiereranordnung vorgenommen, die einen Netzwerkanalysator und einen Netzwerksimulator, also eine Nachbildung des Netzwerkes, aufweist. Der Netzwerkanalysator ermittelt die Leistungsdaten des Netzwerkes, die in den Netzwerksimulator als Nachbildung des Netzwerkes als Eingangsdaten angegeben werden. Der Optimierer führt eine Optimierung in der Nachbildung des Netzwerkes durch, so daß als Ausgangsinformation Parameter zur Verfügung stehen, die in das tatsächliche Netzwerk mit einem Parametersteller eingegeben werden. Der Optimierungsvorgang läuft daher unabhängig von dem realen Netzwerk, aber mit den Daten des realen Netzwerks und unter Beeinflussung des realen Netzwerks mit den optimierten Parametern ab.

Erfindungsgemäß ist es somit möglich, den Optimierungsvorgang parallel zum realen Steuerungssystem ablaufen zu lassen und auf das reale Steuerungssystem mittelbar oder unmittelbar einzuwirken, um das Ergebnis der Optimierung in die Realität umzusetzen. Dieser Vorgang kann nach bestimmten Kriterien wiederholt werden oder auch Online kontinuierlich ablaufen. Dementsprechend kann die Nachbildung des Steuerungssystems durch einen Simulator oder einen echtzeitfähigen Emulator realisiert sein. Beim Emulator werden die Eingangswerte der Steuerung ganz oder überwiegend von tatsächlichen Meßwertgebern abgenommen und können in Echtzeit verarbeitet werden, wobei das Kommunikationsnetzwerk simuliert wird. Beim Simulator werden auch die Datengeneratoren simuliert. Der Simulator kann nicht in Echtzeit arbeiten, so daß mit einem Simulator nur in zeitlichen Abständen wiederholte Optimierungen möglich sind.

Das Eingeben der optimierten Parameter in das Steuerungssystem kann beispielsweise durch ein EPROM-Brenngerät erfolgen, daß die optimierten Parameter in die EPROMS der Teilregler einbrennt. Eine besonders elegante Lösung besteht jedoch darin, die optimierten Parameter über ein Kommunikationsinterface in ein Kommunikationsnetzwerk einzuspeisen, durch das die neuen Parameter auf die betreffenden Teilregler übermittelt und dort zugrunde gelegt werden. Dieses Verfahren setzt jedoch eine entsprechende Ausbildung der Teilregler in dem Steuerungssystem voraus.

Die Erfindung soll im folgenden anhand von in der Zeichnung schematisch dargestellten Ausführungsbeispielen näher erläutert werden. Es zeigen:
- Figur 1: - ein Prinzip-Blockschaltbild für einen auf ein Regelsystem einwirkenden Optimierer,
- Figur 2: - ein Prinzip-Blockschaltbild für einen auf eine Vielzahl von Reglern in einem Netzwerk einwirkenden Optimierer,
- Figur 3: - ein Prinzip-Blockschaltzbild gemäß Figur 2, bei dem eine manuelle Datenübertragung vorgesehen ist,
- Figur 4: - ein Prinzip-Blockschaltbild gemäß Figur 2, bei dem die optimierten Parameter über ein Kommunikationsinterface und das Kommunikationsnetzwerk auf die Regler übertragen werden.

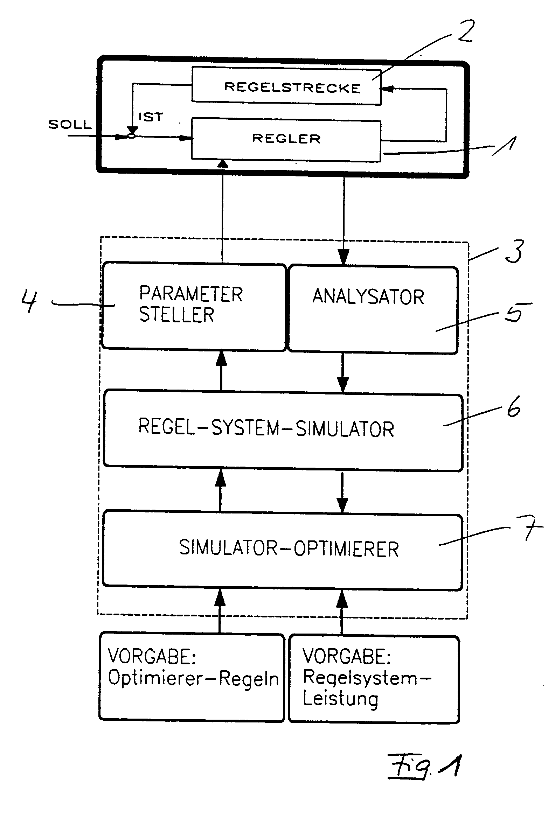

Figur 1 zeigt ein Steuerungssystem, daß aus einem Regler als Steuerung 1, einer Regelstrecke als gesteuertes System 2 und einer Optimierstufe 3 besteht. Der Kreis zwischen Steuerung 1 und gesteuertem System 2 ist in diesem Ausführungsbeispiel geschlossen, so daß ein geschlossenen Regelsystem realisiert ist, in das ein Sollwert eingegeben wird, der mit einem Istwert der Regelstrecke verglichen wird. Die Eigenschaften des Reglers 1 sind von eingestellten Parametern abhängig, die der Steuerung 1 über einen Parametersteller 4 der Optimiererstufe 3 hinzuführbar sind. Der Arbeitszustand des geschlossenen Regelkreises aus Steuerung 1 und gesteuertem System 2 wird durch einen Analysator 5 analysiert. Dessen Ausganssignale gelangen auf einen Simulator 6, der das Regelsystem aus Steuerung 1 und gesteuertem System nachbildet, und zwar mit den durch den Analysator 5 festgestellten Randbedingungen.

Mit dem Regelsystem-Simulator ist ein Simulatoroptimierer 7 verbunden, in den als Vorgaben Optimierer-Regeln und eine gewünschte Regelsystem-Leistung eingebbar sind. Unter diesen Optimierungskriterien verändert der Simulatoroptimierer 7 die Randbedingungen des Simulators 6, bis eine optimierte Arbeitsweise erzielt worden ist. Die sich dieser Arbeitsweise ergebenden Parameter werden vom Regelsystemsimulator 6 auf den Parametersteller 4 geleitet, der die Parameter der Steuerungsstufe 1 entsprechend ändert.

Durch die Analyse der momentanen Zustands des Regelsystems aus Steuerstufe 1 und gesteuertem System 2 wird in dem Regelsystemsimulator 6 der momentane Zustand des Regelsystems nachgebildet, so daß der Optimierer 7 die Optimierung ausgehend von dem momentanen Zustand durchführen kann. Nach Durchführung der Optimierung verändert der Parametersteller 4 die Steuerung 1 so, daß das Regelsystem 1, 2 nunmehr in optimierter Form arbeitet.

Dieser Vorgang kann von Zeit zu Zeit beliebig wiederholt werden. Wird ein echtzeitfähiger Regelsystemsimulator 6 in Form eines Emulators eingesetzt, kann eine derartige Regelung Online kontinuierlich erfolgen.

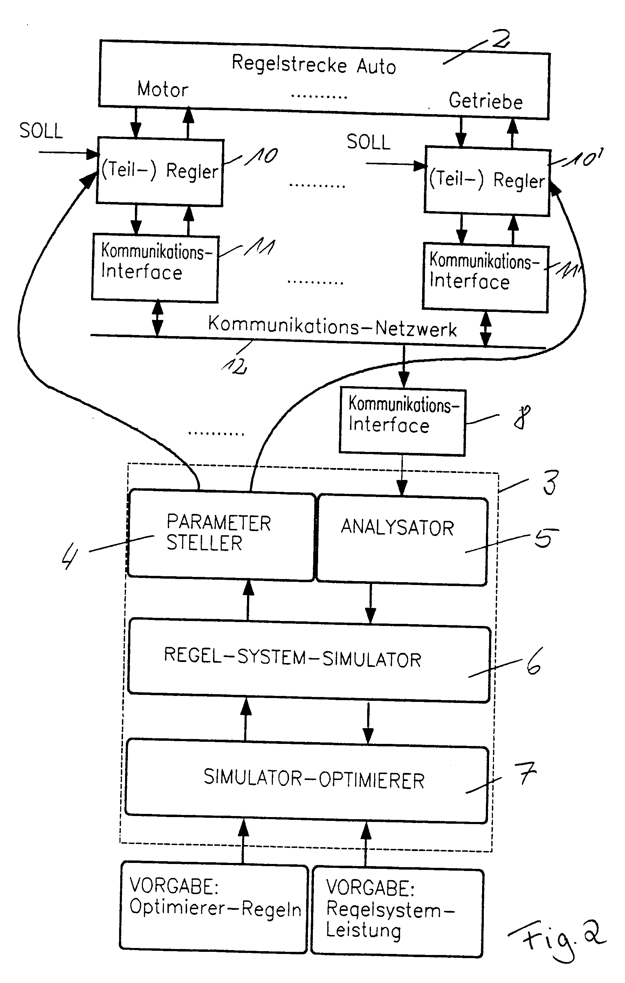

In Figur 2 ist die Optimiererstufe 3 prinzipiell identisch zu der Optimiererstufe 3 aus Figur 1 aufgebaut. Dargestellt ist jedoch die Verwendung einer derartigen Optimiererstufe bei einem Auto als gesteuertes System 2, bei dem eine Vielzahl von Teil-Reglern 10, 10′ auf bestimmte Teile der Regelstrecke Auto einwirken, wie beispielsweise auf Motor und Getriebe. Die von dort von den Teil-Reglern abgenommenen Daten gelangen über ein zugehöriges Kommunikationsinterface 11, 11′ auf ein Kommunikationsnetzwerk 12, so daß die Regler 10, 10′ miteinander kommunizieren und sich gegenseitig beeinflußten können. Die Teil-Regler 10, 10′ verarbeiten die von der Regelstrecke 2 erhaltenen Daten sowie die ihnen von anderen Teil-Reglern 10, 10′ übersandten Daten und berechnen daraus die Steuerungswerte, die auf die Regelstrecke 2 übertragen werden. Für die Kommunikation der Regler 10, 10′ untereinander ist wesentlich, daß die von den Reglern 10, 10′ auf andere Regler 10, 10′ ausgesandten Daten möglichst schnell den anderen Reglern 10, 10′ zur Verfügung stehen, damit eine vollständige aktuelle Dateninformation für die Erstellung des Steuerungswertes für die Regelstrecke 2 zur Verfügung steht.

Der Kommunikationsablauf im Kommunikationsnetzwerk 12 wird von dem Analysator 5 über ein Kommunikationsinterface 8 analysiert und dabei werden ggf. vorhandene Kommunikationsengpäße festgestellt, die zu möglicherweise nicht tolerierbaren Verzögerungen bei der Datenübermittlung führen. Der Parametersteller 4 kann daher beispielsweise für die Teil-Regler 10, 10′ Prioritäten, Aussendefrequenzen von regelmäßig ausgesendeten Informationen usw. ändern.

Bei dem in Figur 2 dargestellten Ausführungsbeispiel wirkt der Parametersteller 4 unmittelbar auf die Teil-Regler 10, 10′ ein, indem beispielsweise mit einem EPROM-Brenngerät neue Datensätze in EPROMS der jeweiligen Regler 10, 10′ eingebrannt werden.

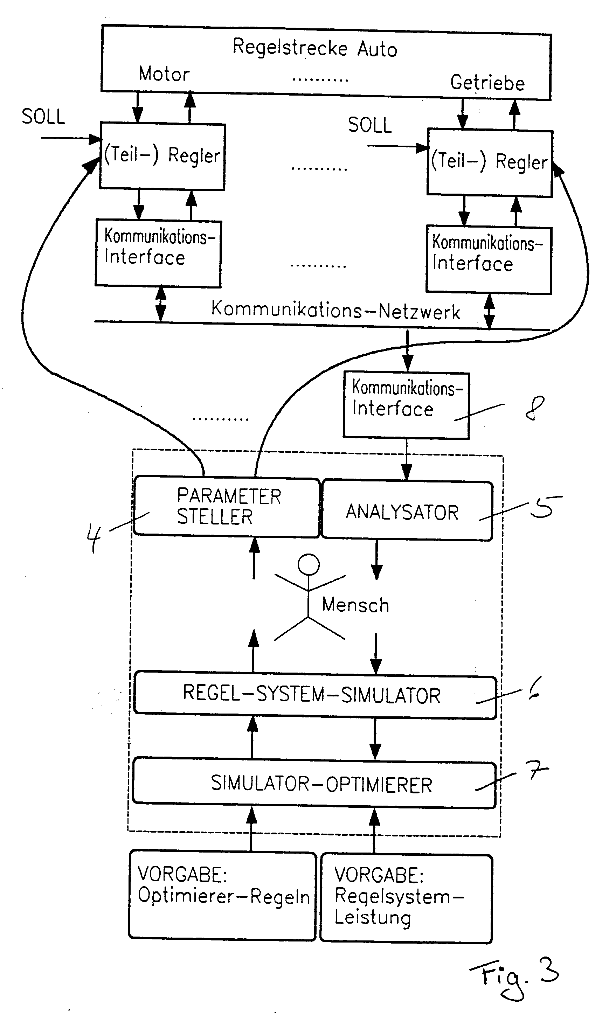

Während das in Figur 2 dargestellte System selbsttätig und automatisch Online arbeitet, kann dieselbe Funktion auch mit einer Trennstelle zwischen Analysator 5/Parameterstelle 4 einerseits und Regelsystemsimulator 6 andererseits ausgebildet werden. Eine zwischengeschaltete Bedienperson kann dabei beispielsweise die Ausgangsdaten des Analysators 5 aufnehmen und zu gegebener Zeit in den Regelsystemsimulator 6 eingeben und nach erfolgter Optimierung die Ausgangsdaten des Regelsystemssimulators 6 in den Parametersteller 4 übertragen. Im übrigen enspricht das in Figur 3 dargestellte Steuerungssytem dem in Figur dargestellten.

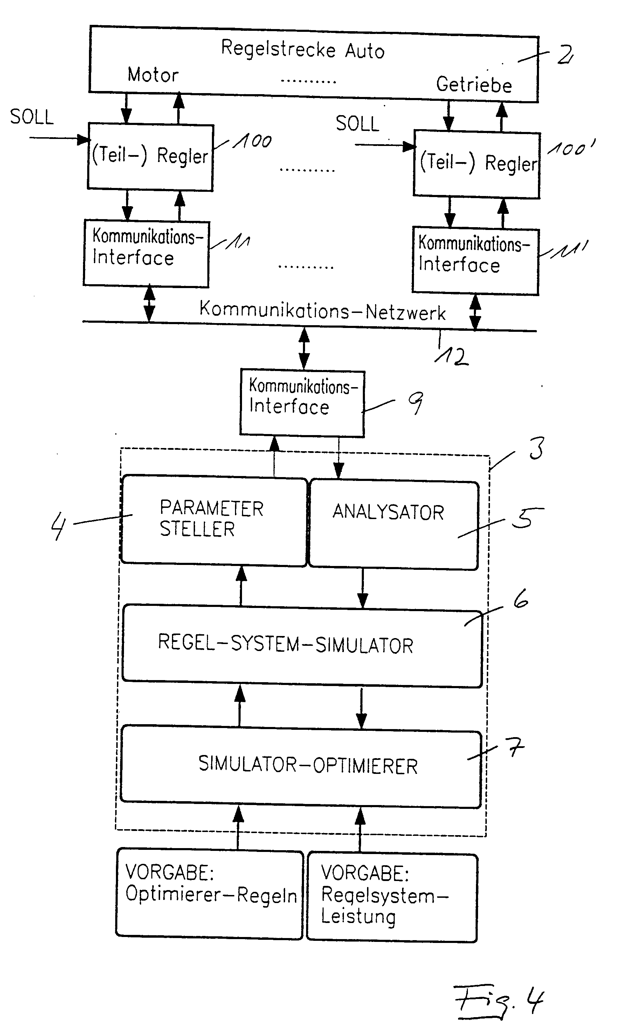

Bei dem in Figur 4 dargestellten Steuerungssystem findet die Kommmunikation zwischen dem Parametersteller 4 und den Teil-Reglern 100, 100′ über ein Kommunikationsinterface 9 statt, das auch die Kommunikation zwischen dem Kommunikationsnetzwerk 12 und dem Analysator 5 ermöglicht. Die optimierten Parameter gelangen über das Kommunikationsnetzwerk 12 und den den Teil-Reglern 100, 100′ zugeordneten Kommunikationsinterfaces 11, 11′ in die Teil-Regler 100, 100′, wo sie als neue Parameter abgespeichert werden. Die Teil-Regler 100, 100′ müssen daher so ausgebildet sein, daß sie eine Abspeicherung dieser Parameter als neue Arbeitsparamter durchführen können.

Das in Figur 4 dargestellte Steuerungssystem arbeitet am elegantesten, hat jedoch den Nachteil, daß die Optmiererstufe 3 nicht - wie bei den Ausführungsbeispielen gemäß Figur 2 und 3 - nachträglich an das Kommunikationsnetzwerk 12 ohne Änderungen der Regler 10, 10′ angeschlossen werden kann, sondern das speziell vorbereitete Regler 100, 100′ verwendet werden müssen. Für Neuauslegungen derartiger Netzwerke ist die Verwendung der die Kommunikation gemäß Figur 4 ermöglichenden Regler 100, 100′ sicher von Vorteil.

## Patentansprüche

1. Optimiereranordnung für ein Parameterabhängiges Netzwerksystem, bestehend aus einer Mehrzahl von Reglern (10, 100), die zur Kommunikation festgestellter Parameter durch ein Netzwerk (12) miteinander verbunden sind und Steuerungswerte für ein gesteuertes System (2) erstellen, mit
- einem mit dem Netzwerk (12) verbundenen Netzwerkanalysator (5) zur Feststellung des Kommunikationsablauf im Netzwerk (12),
- einem mit dem Netzwerkanalysator (5) verbundenen Netzwerksimulator (6),
- einem mit dem Netzwerksimulator (6) verbundenen Optimierer (7), der Parameter der Regler für das im Netzwerksimulator (6) simulierte Netzwerk variiert, bis eine optimierte Arbeitsweise in dem simulierten Netzwerk erzielt wird, und der die zur optimierten Arbeitswelse gehörenden Parameter feststellt und
- einem Parametersteller (4) zur Änderung der Arbeitsweise wenigstens eines Reglers (7, 100) bezüglich des Kommunikationsablaufs im Netzwerk (12) in Übereinstimmung mit dem zur optimierten Arbeitsweise gehörenden, im Optimierer (7) festgestellten Parameter.

2. Optimiereranordnung nach Anspruch 1 bei der Parametersteller (4) seine Stelldaten durch ein mit dem Kommunikationsnetzwerk (12) zwischen den Steuerungen (100, 100′) verbundenes Kommunikationsinterface auf die Steuerungen (100, 100′) überträgt.

## Claims

1. Optimizer for a parameter-dependent network system consisting of a plurality of controllers (10, 100) which are connected among each other in a network (12) for communicating ascertained parameters and establish control values for a controlled system (2), comprising
- a network analyzer (5) connected with the network (12) for ascertaining the communication process in the network (12),
- a network simulator (6) connected with the network analyzer (5),
- an optimizer (7) connected with the network simulator (6), which varies parameters of the controllers for the network simulated in the network simulator (6), until an optimized mode of operation is achieved in the simulated network, and which ascertains the parameters associated with the optimized mode of operation, and
- a parameter final control element (4) for modifying the mode of operation of at least one controller (7, 100) relative to the communication process in the network (12) so as to agree with the parameter associated with the optimized mode of operation and ascertained in the optimizer (7).

2. Optimizer according to claim 1, in which the parameter final control element (4) transmits its control data to the controls (100, 100′) via a communication interface connected with the communication network (12) between the controls (100, 100′).

## Revendications

1. Dispositif d'optimisation pour un système en réseau soumis à des paramètres, composé d'une pluralité de régulateurs (10, 100), reliés ensemble au moyen d'un réseau (12), pour assurer la communication de paramètres fixés, et établissant des valeurs de commande pour un système asservi (2), avec
- un analyseur de réseau (5), relié au réseau (12), destiné à fixer le déroulement de la communication dans le réseau (12),
- un simulateur de réseau (6) relié à l'analyseur de réseau (5),
- un optimiseur (7), relié au simulateur de réseau (6) et produisant une variation de paramètres des régulateurs pour le réseau simulé dans le simulateur de réseau (6), jusqu'à obtention d'un mode de fonctionnement optimisé dans le réseau simulé, et fixant les paramètres correspondants au mode de fonctionnement optimisé, et
- un générateur de paramètres (4), destiné à assurer une modification du mode de fonctionnement d'au moins un régulateur (7, 100), quant au déroulement de la communication dans le réseau (12), en coïncidence avec le paramètre fixé dans l'optimiseur (7) et appartenant au mode de fonctionnement optimisé.

2. Dispositif d'optimisation selon la revendication 1, dans lequel le générateur de paramètres (4) transmet ses données de réglage aux commandes (100, 100′), au moyen d'une interface de communication reliée au réseau de communication (12), entre les commandes (100, 100′).
